Europäisches Patentamt

European Patent Office

Office européen des brevets

(19)

(11) Numéro de publication: **0 033 823**
A1

(12) **DEMANDE DE BREVET EUROPEEN**

(21) Numéro de dépôt: **80870007.4**

(22) Date de dépôt: **07.02.80**

(51) Int. Cl.³: **B 62 D 31/04**

(43) Date de publication de la demande: **19.08.81**
**Bulletin 81/33**

(71) Demandeur: **Van Hool, naamloze vennootschap, Bernard Van Hoolstraat 58, B-2578 Lier (BE)**

(72) Inventeur: **van Hool, Leon Leopold Joanna, Misstraat 72, B-2578 Koningshooikt (BE)**
Inventeur: **Boucquey, Alain Marie Victor Henri, Prins Boudewijniaan 48, B-1150 Bruxelles (BE)**

(84) Etats contractants désignés: **AT BE CH DE FR GB IT NL SE**

(74) Mandataire: **Donné, Eddy, M.F.J.Bockstael Arenbergstraat 13, B-2000 Anvers (BE)**

(54) **Autocar exécuté partiellement comme autocar à impériale.**

(57) Autocar exécuté partiellement comme autocar à impériale, caractérisé en ce que la partie postérieure inférieure de l'autocar est séparée du compartiment de bagages (2) par une cloison (8), le compartiment (6) ainsi obtenu étant en relation avec le compartiment supérieur (3) des voyageurs par un escalier (9), et en ce que le plancher (1) du compartiment (3) des voyageurs est localement (7) surélevé.

EP 0 033 823 A1

- 1 -

## Autocar exécuté partiellement comme autocar à impériale.

Cette invention concerne un autocar exécuté partiellement comme autocar à impériale, plus spécialement un autocar permettant de transporter un plus grand nombre de voyageurs par rapport au nombre de voyageurs pouvant être transportés au moyen d'un autocar traditionnel, de même longueur, le confort et la surface disponible par voyageur restant inchangés.

Plus spécialement encore, l'invention concerne des autocars connus en soi dans lesquels les voyageurs se trouvent à un niveau surélevé, d'où un agrandissement considérable du compartiment de bagages et une vue exceptionnelle, le ou les chauffeurs se trouvant en dessous du plancher du compartiment voyageurs.

D'une manière générale, ces autocars présentent un compartiment bagages très considérable, ce qui a mené la Demanderesse à l'étude d'un emploi plus efficace de ce compartiment, e.a. en prévoyant une partie de ce compartiment inférieur pour le transport et/ou le confort des voyageurs. Ceci peut se faire sans pour autant augmenter la hauteur totale de l'autocar, hors des mesures acceptables pour la majeure partie des circuits touristiques traditionels.

Une condition déterminante pour l'emploi d'une partie dudit compartiment comme espace disponible pour les voyageurs est que soit prévue en dessous du sol des voyageurs, une hauteur suffisante permettant la circulation desdits voyageurs.

Une telle hauteur étant de l'ordre de 1,60 m, il n'est pas possible de l'obtenir dans la partie centrale de l'autocar, sans trop augmenter la hauteur hors tout de l'autocar.

En effet, le seul endroit dans un autocar où cette hauteur limitée peut être obtenue est à l'arrière. L'arrière est le seul endroit dans le compartiment des voyageurs qui permet un rehaussement local du plancher des sièges sans empêcher une vue dégagée pour la majorité des voyageurs assis plus à l'avant. Dans cette exécution la hauteur libre dans le passage entre les sièges, n'est limitée à la valeur légale de 1m60, requise par les codes de la route européens, que uniquement dans la partie arrière du compartiment voyageurs de l'autocar.

Plus à l'avant de celui-ci une marche descendante et une pente légère permettent d'obtenir des hauteurs libres plus confortables dans le corridor central.

Cette disposition permet également une hauteur de plancher plus basse pour la partie avant du corridor central et donc un nombre réduit de marches d'escalier pour descendre du compartiment voyageurs surélevé, jusqu'à l'extérieur.

Il semble donc bien que le seul endroit dans un autocar de hauteur limitée où l'on puisse obtenir deux compartiments voyageurs superposés et de hauteur minimale, soit bien à l'arrière, pour autant que le moteur n'y soit pas logé.

A cette fin et selon l'invention, le moteur du véhicule est monté devant les roues arrière et le plancher voyageurs est localement surélevé à l'arrière de manière qu'on forme, derrière les roues arrière du véhicule, pour ainsi dire un autocar à impériale.

On obtient ainsi, sans préjudice pour le confort des voyageurs, un second compartiment qui peut être aménagé de manière à présenter, d'une façon très confortable, place pour neuf voyageurs supplémentaires, ledit compartiment étant en relation permanente, au moyen d'un escalier, avec le compartiment supérieur.

Dans d'autres exécutions, le susdit compartiment supplémentaire inférieur est transformé en compartiment de bagages accessible au cours du trajet, c.-à-d. pendant le roulement de l'autocar.

Ce compartiment supplémentaire peut éventuellement être pourvu d'un W.C., d'une cuisine, d'un bar, d'un réfrigérateur, etc...

L'autocar selon l'invention consiste substantiellement en ce qu'il est exécuté partiellement comme autocar à impériale, caractérisé en ce que la partie postérieure inférieure de l'autocar est séparée du compartiment des bagages par une cloison, le compartiment ainsi obtenu étant en relation avec le compartiment supérieur des voyageurs par un escalier, et en ce que le plancher du compartiment supérieur des voyageurs est localement surélevé.

D'autres particularités et détails de l'invention ressortiront de la description suivante, laquelle se réfère aux dessins annexés dans lesquels :

la figure 1 représente une vue latérale d'un autocar selon l'invention;

les figures 2 et 3 représentent des coupes, respectivement, selon les lignes II-II et III-III de la figure 1;

la figure 4 représente, à plus grande échelle, la partie indiquée en F4 à la figure 3;

les figures 5, 6 et 7 représentent des variantes de la figure 4.

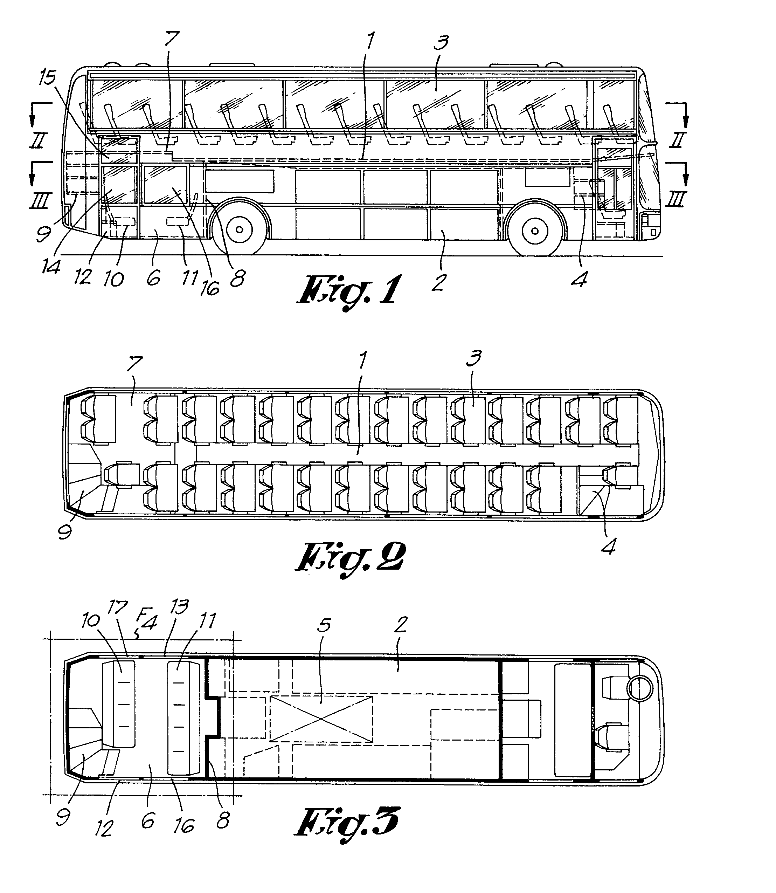

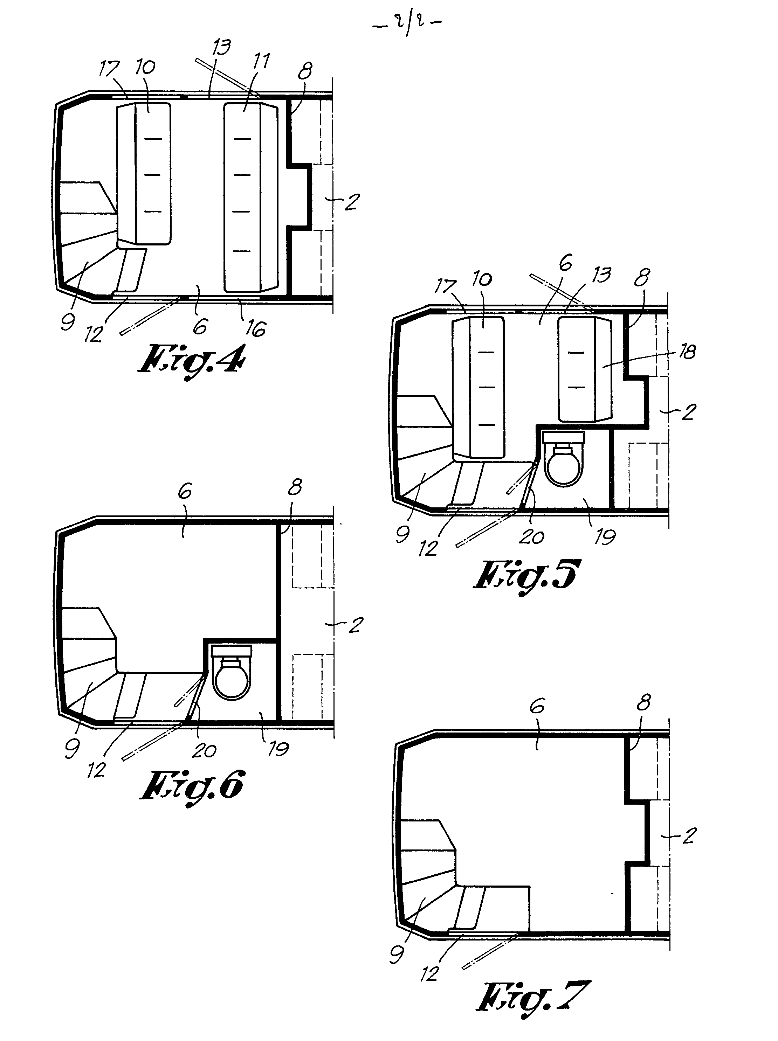

L'autocar tel que représenté dans les dessins annexés est caractérisé par un plancher surélevé 1 permettant, e.a., d'obtenir un compartiment de bagages considérable 2. Le chauffeur se trouvant à un niveau inférieur, le nombre de voyageurs est plus élevé que dans le cas d'un autocar traditionnel présentant les mêmes dimensions, comme visible sur les dessins.

Les voyageurs peuvent atteindre le compartiment supérieur 3 au moyen d'un escalier 4 se trouvant à l'avant et/ou au milieu de l'autocar.

Selon l'invention, le moteur 5 de l'autocar est monté devant les roues arrière de manière qu'on obtient, à l'arrière de l'autocar, un compartiment 6 relativement grand dont la hauteur répond aux exigences minimales de confort et de circulation par le fait que le plancher des voyageurs 1 est localement surélevé, comme indiqué en 7, tout en respectant le confort des voyageurs se trouvant sur ce plancher surélevé.

Ce compartiment 6 est séparé dudit compartiment de bagages par une cloison 8 et ce compartiment 6 est en relation avec le susdit compartiment 3 par un deuxième escalier 9.

Le compartiment 6 ainsi obtenu peut, selon l'invention, être utilisé, d'une manière extrêmement confortable, pour y mettre deux banquettes, respectivement 10-11, afin de pouvoir installer, dans le compartiment 6, neuf personnes. Dans ce cas, le compartiment 6 sera pourvu d'une porte 12 et, éventuellement, d'une porte de secours supplémentaire 13 dont au moins les parties centrales 14, et de préférence aussi les parties supérieures 15, sont transparentes.

De plus, le compartiment 6 sera pourvu de fenêtres, respectivement 16-17.

Dans la variante selon la figure 5, le compartiment 6 est pourvu de banquettes 10 et 18 offrant place pour sept voyageurs, le reste de la superficie disponible étant occupé par une toilette 19 pourvue d'une porte 20.

La figure 6 représente une variante dans laquelle le compartiment sera utilisé comme compartiment de bagages, accessible aux voyageurs au cours du voyage, combiné avec une toilette 18 tandis que, dans la variante selon la figure 7, le compartiment 6 sera entièrement utilisé pour y mettre des bagages, ou une accomodation selon les souhaits de l'exploitant.

Il va sans dire qu'on pourrait envisager d'aménager le compartiment 6 afin de pouvoir y préparer des repas; d'y mettre un buffet; d'y faire sa toilette; etc...

De cette manière, on obtient un autocar à un plus grand nombre de places pour voyageurs et, ceci, sans aucun préjudice pour leur confort.

Revendications.

1.- Autocar exécuté partiellement comme autocar à impériale, caractérisé en ce que la partie postérieure inférieure de l'autocar est séparée du compartiment de bagages (2) par une cloison (8), le compartiment (6) ainsi obtenu étant en relation avec le compartiment supérieur (3) des voyageurs par un escalier (9), et en ce que le plancher (1) du compartiment supérieur (3) des voyageurs est localement (7) surélevé.

2.- Autocar selon la revendication 1, caractérisé en ce que le susdit compartiment postérieur inférieur (6) est pourvu d'au moins une porte (12) ainsi que de fenêtres (16-17).

3.- Autocar selon la revendication 1, caractérisé en ce qu'à l'endroit dudit compartiment postérieur (6), la hauteur utile de l'autocar est divisée en deux ou environ en deux.

4.- Autocar selon l'une des revendications 1 à 3, caractérisé en ce que, dans le susdit compartiment postérieur inférieur (6) sont prévues des banquettes (10-11).

5.- Autocar selon l'une des revendications 1 à 3, caractérisé en ce que, dans le susdit compartiment postérieur inférieur (6), sont prévues des banquettes (10-18) ainsi qu'un W.C. (19).

6.- Autocar selon l'une des revendications 1 à 3, caractérisé en ce que le susdit compartiment postérieur inférieur (6) est aménagé en cuisine.

7.- Autocar selon l'une des revendications 1 à 3, caractérisé en ce que le susdit compartiment postérieur inférieur (6) est aménagé en bar.

8.- Autocar selon l'une des revendications 1 à 3, caractérisé en ce que le susdit compartiment postérieur inférieur (6)

- 2 -  0033823

est aménagé en compartiment de bagages accessible aux voyageurs pendant le roulement de l'autocar.

*Fig. 1*

*Fig. 2*

*Fig. 3*

0033823

—1/2—

Fig.4

Fig.5

Fig.6

Fig.7

Office européen
des brevets

**RAPPORT DE RECHERCHE EUROPEENNE**

EP 80 87 0007.4

| Catégorie | Citation du document avec indication, en cas de besoin, des parties pertinentes | Revendication concernée |
|---|---|---|
| | GB - A - 1 131 052 (J.-M. CRAEYE) <br> * en entier * <br> -- | 1,2, <br> 5,7 |
| | DE - U - 1 950 107 (G. AUWÄRTER) <br> * en entier * <br> -- | 1,3 |
| A | DE - U - 1 931 089 (J.M. CRAEYE) <br> -- | |
| A | DE - U - 1 872 279 (FIAT) <br> & FR - A - 1 284 377 <br> -- | |
| A | US - A - 3 971 455 (W.R. MOLZON) <br> ---- | |

**DOCUMENTS CONSIDERES COMME PERTINENTS**

**CLASSEMENT DE LA DEMANDE (Int. Cl.3)**

B 62 D 31/04

**DOMAINES TECHNIQUES RECHERCHES (Int. Cl.3)**

B 62 D 31/00

**CATEGORIE DES DOCUMENTS CITES**

X: particulièrement pertinent
A: arrière-plan technologique
O: divulgation non-écrite
P: document intercalaire
T: théorie ou principe à la base de l'invention
E: demande faisant interférence
D: document cité dans la demande
L: document cité pour d'autres raisons

&: membre de la même famille, document correspondant

Le présent rapport de recherche a été établi pour toutes les revendications

| Lieu de la recherche | Date d'achèvement de la recherche | Examinateur |
|---|---|---|
| Berlin | 18-09-1980 | LUDWIG |

OEB Form 1503.1 06.78